# EUROPÄISCHE PATENTANMELDUNG

(11) **EP 1 265 011 A2**
(43) Veröffentlichungstag der Anmeldung: **11.12.2002**
(21) Anmeldenummer: 02450132.2
(22) Anmeldetag: 05.06.2002
(51) Int. Cl.: F16K 17/04

(54) **Druckminderventil für Gase**

(30) Priorität: 05.06.2001 AT 4512001
(71) Anmelder: Hochgatterer, Josef, A-4360 Grein (AT); Schlosser, Gerhard, A-2201 Seyring (AT)
(72) Erfinder: Hochgatterer, Josef, A-4360 Grein (AT); Schlosser, Gerhard, A-2201 Seyring (AT)
(74) Vertreter: Hübscher, Helmut, Dipl.-Ing.

(57) **Zusammenfassung**

Ein Druckminderventil (1) für Gase besteht aus einem gegen die Kraft einer Öffnungsfeder (2) axial verschiebbar in einem Gehäuse (3) gelagerten, mit einer Ventilöffnung (4) zusammenwirkenden Ventilkörper (5), der einerseits über eine Eingangsleitung (6) und anderseits über eine Ausgangsleitung (8) mit dem Eingangs- und Ausgangsdruck beaufschlagbar ist. Um vorteilhafte Konstruktionsbedingungen zu schaffen, wird vorgeschlagen, daß der Ventilkörper (5) mit radialem Spiel in die zur Ventilöffnung (4) koaxiale Eingangsleitung (6) eingreift und ausgangsseitig eine im Sinne des Eingangsdruckes durch den Ausgangsdruck belastbare Beaufschlagungsfläche aufweist und daß die durch den Eingangsdruck auf den Ventilkörper (5) wirksame Beaufschlagungskraft gegenüber der gegensinnig wirkenden Kraft der Öffnungsfeder (4) klein ist.

## Beschreibung

Die Erfindung bezieht sich auf ein Druckminderventil für Gase, bestehend aus einem gegen die Kraft einer Öffnungsfeder axial verschiebbar in einem Gehäuse gelagerten, mit einer Ventilöffnung zusammenwirkenden Ventilkörper, der einerseits über eine Eingangsleitung und anderseits über eine Ausgangsleitung mit dem Eingangs- und Ausgangsdruck beaufschlagbar ist.

Die Einhaltung eines konstanten Druckes ist eine der wichtigsten Aufgaben pneumatischer Regelungen. Neben der reinen Sicherheitsfunktion, d. h. der Druckbegrenzung, ist die Realisierung konstanter Arbeitsbedingungen für diverse Verbraucher die wichtigste Aufgabe eines Druckminderventiles. Bei einem Druckminderventil wird der Druck hinter dem Ventil im allgemeinen auf einen durch eine Federkraft vorgegebenen Wert geregelt, wobei der Eingangsdruck in das Ventil stets größer sein muß als der Ausgangsdruck. Druckminderventile können grundsätzlich zwei verschiedene Funktionen erfüllen. Als Sicherheitsventil wird es nur in Notfällen geöffnet, damit der Druck nicht unzulässig groß wird. im Normalbetrieb ist dieses Ventil immer geschlossen. Als Druckbegrenzungsventil dient es zur Einstellung und Konstanthaltung des Systemdruckes. Im Normalbetrieb ist es geöffnet und läßt einen Teil des Gases abströmen. Bei bekannten Druckminderventilen wird der Ventilkörper durch die Öffnungsfeder allzeit in seine Öffnungsstellung gedrückt. Der Ausgangsdruck wird üblicherweise zu einer Kraftbeaufschlagung des Ventilkörpers entgegen der Federkraft benutzt. Dazu wirkt der Ausgangsdruck beispielsweise auf die als Kolben ausgebildete Stirnfläche des Ventilkörpers. Übersteigt die durch den Ausgangsdruck auf den Kolben wirkende Kraft die Federkraft, so wird der Ventilkörper soweit in seine Schließstellung verschoben, bis sich in der Ausgangsleitung durch den Drosseleffekt am Ventilkörper der gewünschte Ausgangsdruck einstellt.

Als ideales stationäres Verhalten eines Druckbegrenzungsventiles wird ein konstanter Druck nach dem Ventil angestrebt, der vom Eingangsdruck soweit wie möglich unabhängig ist. Dies ist vor allem dann von Bedeutung, wenn der Eingangsdruck großen Schwankungen unterliegt, wie dies beispielsweise beim Entleeren einer Gasflasche der Fall ist. Die bekannten Druckregler erfüllen diese Anforderungen nur in begrenztem Ausmaß, müssen bei verschiedenen oder schwankenden Eingangsdrücken nachreguliert werden, besitzen zudem eine erhebliche Baugröße und sind somit nicht für einen raumsparenden Einbau geeignet.

Der Erfindung liegt somit die Aufgabe zugrunde, ein Druckminderventil der eingangs geschilderten Art derart auszugestalten, daß ein einfaches sich selbst regulierendes Druckminderventil geschaffen wird, daß bei großen Schwankungen des Eingangsdruckes, wie es beispielsweise beim Entleeren von Gasflaschen auftritt, nur eine geringe Druckschwankung am Ausgang liefert und das sich durch seine kompakte bzw. platzsparende Bauweise auszeichnet.

Die Erfindung löst die gestellte Aufgabe dadurch, daß der Ventilkörper mit radialem Spiel in die zur Ventilöffnung koaxiale Eingangsleitung eingreift und ausgangsseitig eine im Sinne des Eingangsdruckes durch den Ausgangsdruck belastbare Beaufschlagungsfläche aufweist und daß die durch den Eingangsdruck auf den Ventilkörper wirksame Beaufschlagungskraft gegenüber der gegensinnig wirkenden Kraft der Öffnungsfeder klein ist.

Durch das radiale Spiel entsteht zwischen Ventilkörper und der Eingangsleitung ein Ringspalt, durch den das Gas in der Ventiloffenstellung zur Ausgangsleitung hin strömen kann. Im Übergangsbereich zwischen Eingangsleitung und Gehäuse wird der Ringspalt verringert, so daß sich bei einem Verschieben des Ventilkörpers aus der Eingangsleitung in das Gehäuse eine Drossel bzw. Sperrwirkung für das einströmende Gas ergibt. Erfindungsgemäß wird besonders darauf geachtet, daß die eingangsseitige Beaufschlagungsfläche des Ventilkörpers so klein wie möglich gehalten wird, so daß sich durch den Eingangsdruck auf diese Fläche nur eine geringe axiale Kraft auf den Ventilkörper ergibt. Die durch den Ausgangsdruck belastete Beaufschlagungsfläche ist im Verhältnis zur vom Eingangsdruck beaufschlagten Fläche sehr groß, so daß sich auch bei einem geringen einzustellenden Ausgangsdruck noch eine ausreichende Beaufschlagungskraft erzielen läßt um die Federkraft, die wiederum ein Vielfaches der bei maximalem Eingangsdruck eingangsseitig auf den Ventilkörper wirkenden Kraft sein muß, überwinden zu können. Dadurch ergibt sich auch bei großen Eingangsdruckschwankungen nur eine geringe Ausgangsdruckschwankung. Die kurze Baulänge des erfindungsgemäßen Druckminderventiles wird im wesentlichen durch die gleichsinnige Druckbeaufschlagung des Ventilkörpers mit dem Eingangs- sowie Ausgangsdruck erreicht.

Um die Dichtwirkung des Ventilkörpers bei geschlossenem Druckminderventil zu verbessern wird vorgeschlagen, daß zwischen Gehäuse und Eingangsleitung ein Dichtkörper geklemmt ist, der zusammen mit dem Ventilkörper eine Drossel bzw. ein Verschlußorgan für das Gas bildet. Damit wird erreicht, daß die Eingangs- von der Ausgangsleitung sicher abgetrennt werden kann, wenn kein Gasdurchsatz durch das Druckminderventil erfolgt. Es wird somit sichergestellt, daß der Ausgangsdruck nicht über den durch die Feder voreingestellten Ausgangsdruck steigen kann. Wird die Federkraft vom Ausgangsdruck überwunden, wird der Ventilkörper gegen den Dichtkörper gepreßt, wodurch die geforderte Dichtwirkung erreicht wird. Bei geöffnetem oder teilweise geöffnetem Ventil bilden der Ventilkörper und der Dichtkörper eine wohldefinierte Drossel aus. Aufgrund der geringen Ventilkörpergröße (des Ventilkörperumfanges) sind auch die auf den Ventilkörper wirkenden Drosselkräfte infolge der Strömung des Gases um die Drossel vernachlässigbar gering, so daß diese Kräfte ebenfalls nur kaum merkbare Druckschwankungen in der Ausgangsleitung hervorrufen.

Der Ventilkörper kann beispielsweise über einen Kolben und eine Schubstange od. dgl. durch den Ausgangsdruck belastet werden. Um die geforderte geringe Baugröße zu erzielen, hat es sich aber als besonders vorteilhaft erwiesen, wenn der Ventilkörper über einen zylindrischen Körper einerends an einen Ventilbolzen größeren Durchmessers angeformt ist und der Ventilbolzen andernends eine Membran trägt. Über den am Ventilkörper angeformten zylindrischen Körper kleineren Durchmessers kann beispielsweise die Drosselgeometrie uns somit das Schließverhalten des Ventilkörpers beeinflußt werden. Der an diesen zylindrischen Körper angeformte Ventilbolzen sorgt dafür, daß der Ventilkörper einerseits sicher geführt ist und anderseits die Membran günstig an ihm befestigt werden kann. Der Ventilbolzen ist wiederum mit Spiel im Gehäuse geführt, so daß von der Eingangsleitung zur Ausgangsleitung strömendes Gas im Spalt zwischen Gehäuse und Ventilbolzen in den Raum zwischen Gehäuse und Membran strömen kann.

Um die Membran sicher am Ventilbolzen zu halten und um ihre mechanische Belastung zu verringern, wird vorgeschlagen, die Membran zwischen zwei Scheiben am Ventilbolzen und mit ihrem äußeren Umfang am Gehäuse, vorzugsweise mit einer Membranschraube, zu klemmen. Durch das Klemmen der Membran an ihrem äußeren Umfang am Gehäuse mit einer Membranschraube wird ein besonders wartungsfreundliches Druckminderventil geschaffen, da bei einem Defekt oder zur Wartung der Membran bzw. des Drosselkörpers lediglich die Membranschraube vom Gehäuse gelöst werden muß.

Um den Ausgangsdruck rasch und einfach variieren bzw. einstellen zu können, wird vorgeschlagen, daß sich die Öffnungsfeder einerseits an einer Scheibe bzw. der Membran und anderseits über eine in die Membranschraube eingedrehte Einstellschraube am Gehäuse abstützt. Zum Einstellen des Ausgangsdruckes muß somit lediglich die Einstellschraube in die Membranschraube ein- bzw. ausgedreht werden, wodurch sich die Federvorspannung und somit die Belastung des Ventilkörpers entgegen des Eingangsdruckes an den geforderten Ausgangsdruck anpassen läßt.

Der durch das Druckminderventil pro Zeiteinheit strömende Massenstrom wird besonders vorteilhaft dadurch eingestellt, daß in der Ausgangsleitung ein den Strömungsweg im Querschnitt reduzierendes Nadelventil angeordnet ist.

In der Zeichnung ist der Erfindungsgegenstand rein schematisch beispielsweise dargestellt. Es zeigen
- Fig. 1: ein erfindungsgemäßes Druckminderventil in teilgeschnittener Seitenansicht,

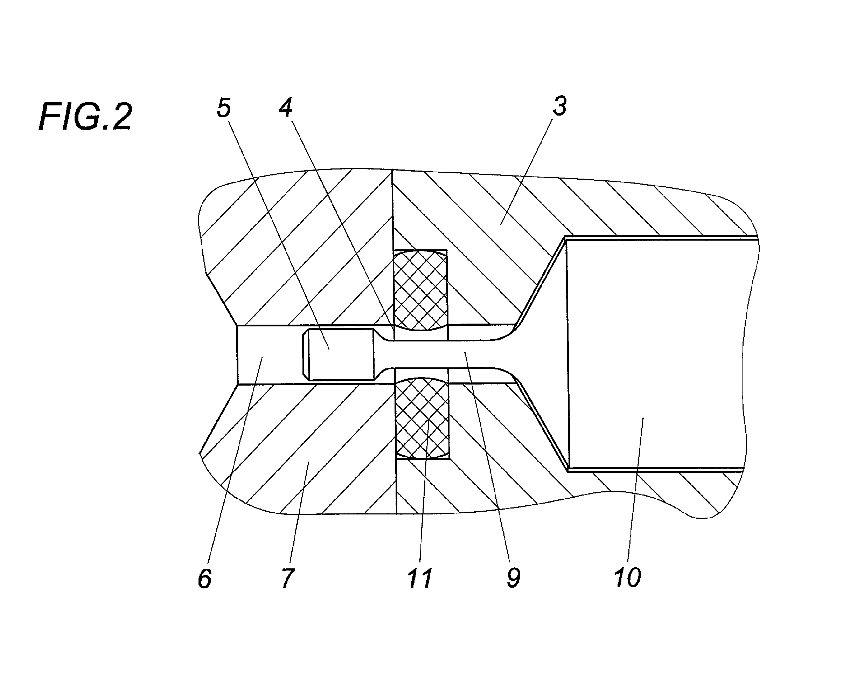

- Fig. 2: einen Ausschnitt um den Ventilkörper aus Fig. 1 in vergrößertem Maßstab und

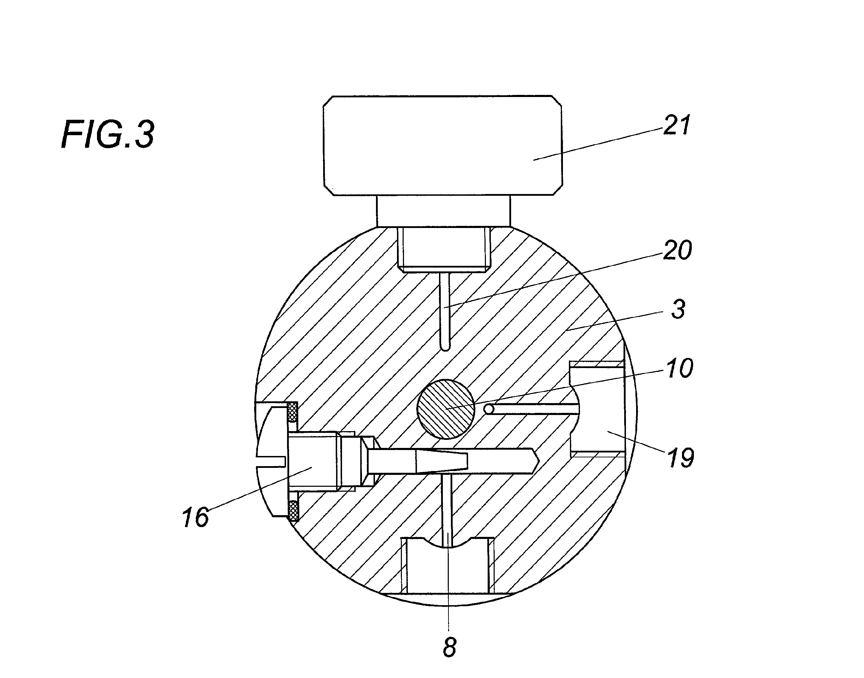

- Fig. 3: den Ventilkörper im Schnitt nach der Linie III-III der Fig. 1.

Ein Druckminderventil 1 für Gase besteht aus einem gegen die Kraft einer Öffnungsfeder 2 axial verschiebbar in einem Gehäuse 3 gelagerten, mit einer Ventilöffnung 4 zusammenwirkenden Ventilkörper 5. Der Ventilkörper 5 sitzt in der Eingangsleitung 6 eines an eine nicht näher dargestellte Druckquelle anschließbaren Anschlußstückes 7. Das durch das Druckminderventil 1 einströmende Gas wird über die Ausgangsleitung 8 einem Verbraucher zugeführt. An den Ventilkörper 5 ist ein zylindrischer Körper 9 kleineren Durchmessers angeformt, an den sich wiederum ein Ventilbolzen 10 größeren Durchmessers anschließt. Der Ventilkörper 5 greift mit radialem Spiel in die zur Ventilöffnung 4 koaxiale Eingangsleitung 6 ein. Zwischen dem Gehäuse 3 und der Eingangsleitung 6 ist ein Dichtkörper 11, ein hochbelastbarer Dichtring, eingeklemmt, der zusammen mit dem Ventilkörper 5 eine Drossel bzw. ein Verschlußorgan bildet. Am Ventilbolzen 10 ist eine Membran 12 als Beaufschlagungsfläche für den Ausgangsdruck zwischen zwei Scheiben 13 gehalten, wobei die Membran 12 mit ihrem äußeren Umfang mit einer Membranschraube 14 am Gehäuse 3 geklemmt ist. Die Öffnungsfeder 2 stützt sich einerseits an der Scheibe 13 und anderseits über eine in die Membranschraube 14 eingedrehte Einstellschraube 15 am Gehäuse 3 ab. In der Ausgangsleitung 8 ist ein den Strömungsweg im Querschnitt reduzierendes Nadelventil 16 angeordnet.

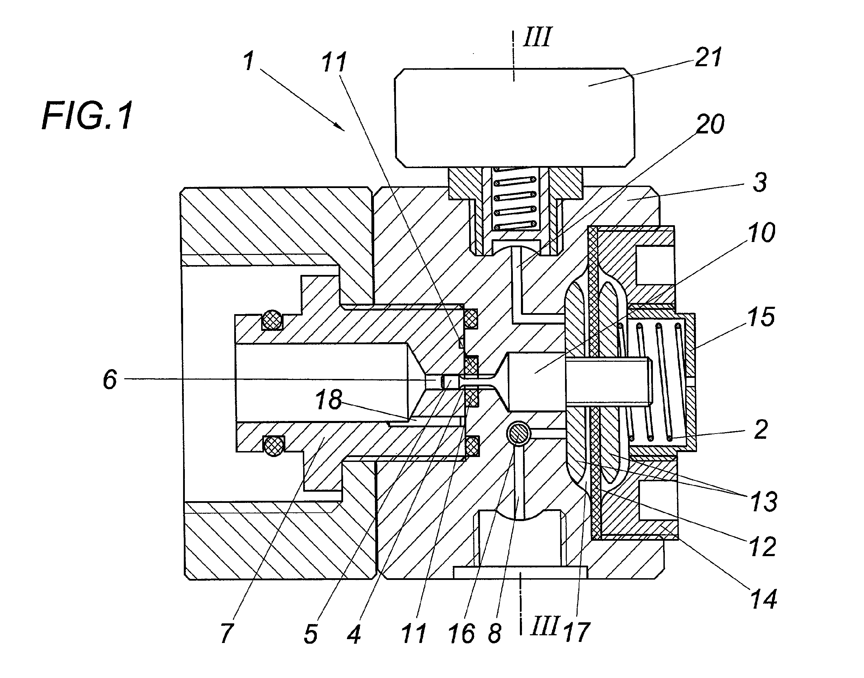

In seiner Offenstellung (Fig. 1) wird der Ventilkörper 5 in axialer Richtung im Ringspalt zwischen Ventilkörper 5 und Anschlußkörper 7 umströmt, wonach das Gas durch die Ventilöffnung 4 und durch den Ringspalt zwischen Ventilbolzen 10 und Gehäuse 3, in den Raum 17 zwischen Gehäuse 3 und Membran 12 strömt. Von diesem Raum 17 strömt das Gas weiter über das Nadelventil 16 und die Ausgangsleitung 8 zu dem nicht dargestellten Verbraucher. Übersteigt die in Folge des Druckes in der Ausgangsleitung 8 und somit im Raum 17 auf die Membran 12 wirkende Kraft eine einen mittels der Öffnungsfeder 2 einstellbare Federkraft, so wird die Membran 12 samt den Scheiben 13, den Ventilbolzen 10 und somit dem Ventilkörper 5 entgegen der Federkraft 2, also in Strömungsrichtung des Gases axial im Gehäuse 3 verschoben. Dadurch wird die Ventilöffnung 4 verkleinert, und somit die Drosselwirkung erhöht und die Durchflußmenge vermindert. Wird vom Verbraucher kein Gas benötigt, ist also kein Massenstrom vorhanden, wird der Ventilkörper 5 in Folge der auf die Membran 12 wirkenden Kraft noch weiter in die Ventilöffnung 4 gedrückt, bis er am Dichtkörper 11 anliegt und somit das Ventil schließt. Wird der Verbraucher eingeschaltet, verringert sich der Druck in der Ausgangsleitung und die Öffnungsfeder 2 wird den Ventilkörper 5 wieder vom Dichtkörper 11 abheben und einen dem benötigten Massenstrom entsprechenden Drosselspalt an der Ventilöffnung 4 freigeben.

Um den jeweiligen Flaschendruck an einem Manometer zur Anzeige zu bringen, ist im Anschlußstück 7 eine Bypaßleitung 18 vorgesehen, die zu einem Anschluß 19 im Gehäuse 3 führt, an dem ein Manometer oder ein Sicherheitsventil angeschlossen werden können. Um bei defektem Druckminderventil, z. B. bei defektem Dichtkörper 11, zu verhindern, daß der Flaschendruck direkt an den Verbraucher weitergeleitet wird, ist der Raum 17 zusätzlich über eine Leitung 20 an ein schematisch dargestelltes Sicherheitsventil 21 angeschlossen. Die Begrenzung des Massenflusses durch das Druckminderventil 1 erfolgt durch ein Ein- bzw. Ausdrehen des Nadelventiles 16 aus dem Gehäuse 3.

Um einen möglichst konstanten Ausgangsdruck bei schwankendem Eingangsdruck zu erhalten, sollte die auf den Ventilkörper 5 wirkende Öffnungsfederkraft mindestens 10mal größer sein als die bei maximalem Eingangsdruck auf die Beaufschlagungsfläche des Ventilkörpers 5 wirkende Kraft.

## Patentansprüche

1. Druckminderventil (1) für Gase, bestehend aus einem gegen die Kraft einer Öffnungsfeder (2) axial verschiebbar in einem Gehäuse (3) gelagerten, mit einer Ventilöffnung (4) zusammenwirkenden Ventilkörper (5), der einerseits über eine Eingangsleitung (6) und anderseits über eine Ausgangsleitung (8) mit dem Eingangs- und Ausgangsdruck beaufschlagbar ist, **dadurch gekennzeichnet, daß** der Ventilkörper (5) mit radialem Spiel in die zur Ventilöffnung (4) koaxiale Eingangsleitung (6) eingreift und ausgangsseitig eine im Sinne des Eingangsdruckes durch den Ausgangsdruck belastbare Beaufschlagungsfläche aufweist und daß die durch den Eingangsdruck auf den Ventilkörper (5) wirksame Beaufschlagungskraft gegenüber der gegensinnig wirkenden Kraft der Öffnungsfeder (4) klein ist.

2. Druckminderventil nach Anspruch 1, **dadurch gekennzeichnet, daß** zwischen Gehäuse (3) und Eingangsleitung (6) ein Dichtkörper (11) geklemmt ist, der zusammen mit dem Ventilkörper (5) eine Drossel bzw. ein Verschlußorgan bildet.

3. Druckminderventil nach Anspruch 1 oder 2, **dadurch gekennzeichnet, daß** der Ventilkörper (5) über einen zylindrischen Körper (9) kleineren Durchmessers einerends an einen Ventilbolzen (10) größeren Durchmessers angeformt ist und der Ventilbolzen (10) andernends eine Membran (12) trägt.

4. Druckminderventil nach Anspruch 3, **dadurch gekennzeichnet, daß** die Membran (12) zwischen zwei Scheiben (13) am Ventilbolzen (10) und mit ihrem äußeren Umfang am Gehäuse (3), vorzugsweise mit einer Membranschraube (14), geklemmt ist.

5. Druckminderventil nach Anspruch 4, **dadurch gekennzeichnet, daß** sich die Öffnungsfeder (2) einerseits an einer Scheibe (13) bzw. der Membran (12) und anderseits über eine in die Membranschraube (14) eingedrehte Einstellschraube (15) am Gehäuse (3) abstützt.

6. Druckminderventil nach einem der Ansprüche1 bis 5, **dadurch gekennzeichnet, daß** in der Ausgangsleitung ein den Strömungsweg im Querschnitt reduzierendes Nadelventil (16) angeordnet ist.
